# EUROPÄISCHE PATENTANMELDUNG

(11) **EP 3 479 961 A1**
(43) Veröffentlichungstag der Anmeldung: **08.05.2019**
(21) Anmeldenummer: 18182691.8
(22) Anmeldetag: 10.07.2018
(51) Int. Cl.: B25B 15/00, F16B 23/00, F16B 41/00

(54) **SCHRAUBE ZUM LÖSBAREN BEFESTIGEN VON ÖFFENTLICH ZUGÄNGLICHEN GEGENSTÄNDEN, SCHRAUBWERKZEUG SOWIE BETREFFENDES STADTMOBILIAR**

(30) Priorität: 19.07.2017 DE 202017104290 U
(71) Anmelder: Barich, Lutz, 57250 Netphen (DE); Barich, Rotger, 54439 Saarburg-Kahren (DE)
(72) Erfinder: Barich, Lutz, 57250 Netphen (DE); Barich, Rotger, 54439 Saarburg-Kahren (DE); Thibol, Christoph, 54636 Messerich (DE)
(74) Vertreter: advotec.

(57) **Zusammenfassung**

Schraube (1) zum lösbaren Befestigen von öffentlich zugänglichen Gegenständen, wie Poller mit und ohne Beleuchtung, Straßenmobiliar, Straßenschilder, Spielplatzgeräte u. dgl., an einem im Boden verankerten Befestigungselement, wobei die Schraube (1) einen zylindrischen Schraubenkopf (3) mit einem daran ausgebildeten Gewindeschaft (2) aufweist, wobei an dem Schraubenkopf (3) eine Werkzeugaufnahme (4) vorgesehen ist, und wobei die Werkzeugaufnahme (4) aus einer Ausnehmung (5) in dem Schraubenkopf (3) mit einer tropfenförmig ausgebildeten Eingriffskontur (6) gebildet ist.

## Beschreibung

Die Erfindung betrifft eine Schraube zum lösbaren Befestigen von öffentlich zugänglichen Gegenständen, wie Poller mit und ohne Beleuchtung, Straßenmobiliar, Straßenschilder, Spielplatzgeräte u. dgl., an einem im Boden verankerten Befestigungselement, wobei die Schraube einen zylindrischen Schraubenkopf mit einem daran ausgebildeten Gewindeschaft aufweist, wobei an dem Schraubenkopf eine Werkzeugaufnahme vorgesehen ist, ein Schraubwerkzeug zum Ein- und Ausdrehen einer Schraube sowie Stadtmobiliar mit einer Schraube und einem Schraubwerkzeug.

Derartige Schrauben und dafür vorgesehene Schraubwerkzeuge sind hinlänglich bekannt. Die Schrauben weisen dabei in der Regel einen Mehrkant auf, der beispielsweise als Innen-Mehrkant im Schraubenkopf vorgesehen ist. Alternativ kann der Mehrkant auch die Außenkontur des Schraubenkopfes bilden. Da diese Schrauben öffentlich zugängliche Gegenstände vor einer unrechtmäßigen Entfernung schützen sollen und beispielsweise Sechskant-Maul- oder Ringschlüssel sowie -Inbusschlüssel sehr weit verbreitet sind, ist bereits seit längerem der heutzutage in diesen Bereichen verwendete Mehrkant sehr oft ein Dreikant, wodurch ein Spezial-Schraubwerkzeug notwendig ist. Zwischenzeitlich sind auch derartige Spezial-Schraubwerkzeuge sehr weit verbreitet, so dass eine Sicherheit gegen unrechtmäßige Entfernung der Gegenstände nicht mehr gewährleistet ist. Insbesondere im Bereich von Pollern, die in der Regel eine Durchfahrt von Kraftfahrzeugen verhindern sollen, geschieht es immer häufiger, dass Unberechtigte die Poller entfernen und den eigentlich gesperrten Bereich befahren.

Der Erfindung liegt die Aufgabe zugrunde, eine Schraube, ein Schraubwerkzeug und Stadtmobiliar der angegebenen Gattung zu schaffen, mit der bzw. dem die Sicherheit von öffentlich zugänglichen Gegenständen vor unrechtmäßiger Entfernung wesentlich erhöht ist, ohne dass zusätzliche Sicherungsmittel notwendig sind, wobei zudem die Kosten für die Herstellung und Anschaffung relativ gering gehalten sind.

Diese Aufgabe wird erfindungsgemäß durch eine Schraube mit den Kennzeichnungsmerkmalen des Patentanspruchs 1, durch ein Schraubwerkzeug mit den Kennzeichnungsmerkmalen des Patentanspruchs 9 und durch Stadtmobiliar mit den Kennzeichnungsmerkmalen des Patentanspruchs 13 gelöst.

Zweckmäßige Weiterbildungen der Erfindung sind in den jeweiligen Unteransprüchen gekennzeichnet.

Bei der erfindungsgemäßen Schraube ist die Werkzeugaufnahme aus einer Ausnehmung in dem Schraubenkopf mit einer tropfenförmig ausgebildeten Eingriffskontur gebildet. Die besondere Eingriffskontur verhindert ein Ein- und Ausdrehen der Schraube mit derzeit bekannten und im Handel erhältlichen Schraubwerkzeugen. Auch eine Betätigung der Schraube, dessen Schraubenkopf in der Regel in dem vorliegenden Anwendungsbereich von einer Bohrungswandung abgedeckt ist, mittels einer Zange o.dgl. ist ausgeschlossen. Ein Ein- und Ausdrehen der Schraube ist lediglich mit einem an die Eingriffskontur angepassten Schraubwerkzeug möglich, so dass hier eine wesentlich erhöhte Sicherheit gegeben ist.

Die tropfenförmig ausgebildete Eingriffskontur kann einen koaxial zu einer Längsmittelachse der Schraube verlaufenden größeren Kreisringabschnittswandbereich und einen mit radialem Abstand zur der Längsmittelachse angeordneten kleineren Kreisringabschnittswandbereich aufweisen, wobei die Kreisringabschnittswandbereiche über dieselben tangierte gerade Wandbereiche miteinander verbunden sein können.

Um möglichst wenig Angriffsfläche z.B. für Zangen o.dgl. Werkzeuge zu bilden, kann die Tiefe der Ausnehmung etwa der Hälfte der Höhe des Schraubenkopfes entsprechen, wobei die Höhe des Schraubenkopfes etwa ein Drittel des Durchmessers des Schraubenkopfes sein kann.

In die Ausnehmung kann eine dieselbe gegen Witterungseinflüsse und Schmutz schützende Abdeckung formschlüssig einsetzbar sein. Die Abdeckung sorgt dafür, dass das Schraubwerkzeug jederzeit direkt in die Ausnehmung eingesetzt werden kann, da sich in der Ausnehmung keinerlei Schmutz oder sonstiges ablagern kann.

Die Schraube kann entweder aus Stahl bestehen, wobei dieselbe zudem eine Verzinkung als Korrosionsschutz aufweisen kann. Alternativ kann die Schraube auch aus Edelstahl bestehen.

Das erfindungsgemäße Schraubwerkzeug ist zum Ein- und Ausdrehen der Schraube vorgesehen und weist ein Steckelement auf, das mit einem Ansatz formschlüssig in die Ausnehmung der Schraube einsetzbar ist und so durch Krafteinwirkung auf die Wandbereiche der Ausnehmung ein Ein- und Ausdrehen der Schraube gewährleistet.

Dabei kann das Steckelement an einem Ende einer Betätigungsstange angeordnet sein, wobei an dem anderen Ende der Betätigungsstange ein Griffelement vorgesehen sein kann. Über die Betätigungsstange kann ein innerhalb einer Bohrung liegender Schraubenkopf sehr leicht erreicht werden, wobei über das Griffelement die erforderliche Kraft zum Anziehen und Lösen der Schraube auf dieselbe aufgebracht werden kann.

Das Griffelement an dem anderen Ende der Betätigungsstange kann ein T-förmig ausgebildeter Griff sein, der eine Einhandbedienung des Schraubwerkzeugs gewährleistet.

Um ggf. eine höhere Kraft auf die Schraube aufbringen zu können, kann das Steckelement an seinem Umfang einen Mehrkant, bevorzugt einen Vierkant, besonders bevorzugt einen Sechskant aufweisen.

Das erfindungsgemäße Stadtmobiliar weist eine erfindungsgemäße Schraube auf, die mit einem erfindungsgemäßen Schraubwerkzeug ein- und ausgedreht werden kann. Hinsichtlich der Vorteile des erfindungsgemäßen Stadtmobiliars wird auf die Vorteilsbeschreibung der erfindungsgemäßen Schraube und des erfindungsgemäßen Schraubwerkzeugs verwiesen. Weitere vorteilhafte Ausführungsformen ergeben sich aus den auf die Vorrichtungsansprüche 1 und 9 rückbezogenen Unteransprüchen.

Nachfolgend wird anhand der Zeichnung ein Ausführungsbeispiel der Schraube sowie des Schraubwerkzeugs näher erläutert.

Es zeigen
- **Fig. 1**: eine Seitenansicht der erfindungsgemäßen Schraube,
- **Fig. 2**: eine Ansicht in Richtung des Pfeiles II in **Fig. 1****,**
- **Fig. 3**: eine Seitenansicht des erfindungsgemäßen Schraubwerkzeugs und
- **Fig. 4**: eine Ansicht in Richtung des Pfeiles IV in **Fig. 3** ohne Griffelement.

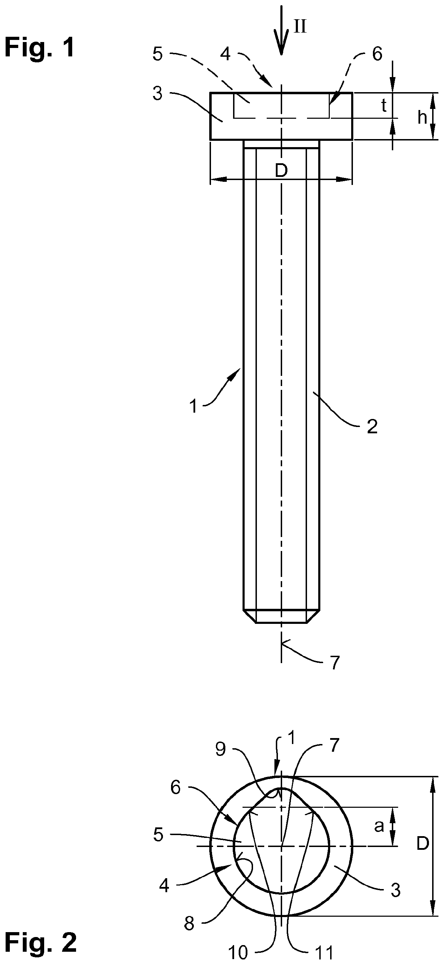

Das in **Fig. 1** und **2** dargestellte Ausführungsbeispiel einer Schraube 1 ist zum lösbaren Befestigen von öffentlich zugänglichen Gegenständen, wie Poller mit und ohne Beleuchtung, Straßenmobiliar, Straßenschilder, Spielplatzgeräte u dgl., an einem im Boden verankerten Befestigungselement vorgesehen (nicht dargestellt). Das Befestigungselement kann bei einem nicht dargestellten Ausführungsbeispiel ein Verbindungsstück aufweisen, das aus einem in eine Öffnung beispielsweise eines Pollers ragenden Einsteckteil und einem in einer im Boden eingesetzten Einbetthülse verriegelbaren Halteteil besteht. Das Befestigungselement wird mit dem Halteteil über Längsnuten in die Einbetthülse eingesteckt und durch eine Drehung um 90° bajonettartig gekuppelt. Dabei greifen Nocken des Halteteils in eine entsprechende Innenumfangsnut der Einbetthülse ein.

Der Poller ist mit der Öffnung auf das Einsteckteil des Befestigungselementes so aufgesetzt, dass konische Querbohrungen des Pollers mit einer Querbohrung des Einsteckteils fluchten, die an beiden Enden jeweils eine konische Erweiterung aufweisen. Zwei Klemmkegel sind von beiden Seiten des Pollers in die konischen Querbohrungen desselben so eingesetzt, dass die Klemmkegel bereits ein Stück in die konischen Erweiterungen der Querbohrung des Einsteckteils eingreifen. Der schraubenseitige Klemmkegel weist eine Durchgangsbohrung für die Schraube 1 auf, während der mutterseitige Klemmkegel mit einem Innengewinde versehen sein kann, in den ein Gewindeschaft 2 der Schraube 1 eingeschraubt ist.

Beim Anziehen der Schraube 1 werden die Klemmkegel, die zunächst mit Spiel in der jeweiligen konischen Querbohrung des Pollers und in den konischen Erweiterungen der Querbohrung des Einsteckteils sitzen, nach innen gezogen, um durch eine Art Keilwirkung das gesamte Befestigungselement nach oben zu ziehen und gleichzeitig den Poller nach unten auf die Einbetthülse zu drücken. Dieser Vorgang wird begrenzt durch den Anschlag der Nocken des Halteteils an einer oberen Wand der Innenumfangsnut der Einbetthülse.

Bei der Schraube 1, die neben dem Gewindeschaft 2 einen zylindrischen Schraubenkopf 3 aufweist und aus Stahl, der verzinkt sein kann, oder aus Edelstahl besteht, ist an dem Schraubenkopf 3 eine Werkzeugaufnahme 4 zum Anziehen der Schraube 1 vorgesehen, die aus einer Ausnehmung 5 mit einer tropfenförmig ausgebildeten Eingriffskontur 6 gebildet ist. Dabei weist die Eingriffskontur 6 einen koaxial zu einer Längsmittelachse 7 der Schraube 1 verlaufenden größeren Kreisringabschnittswandbereich 8 und einen mit radialem Abstand a zu der Längsmittelachse kleineren Kreisringabschnittswandbereich 9 auf. Die beiden Kreisringabschnittswandbereiche 8, 9 sind über dieselben tangierende gerade Wandbereiche 10, 11 miteinander verbunden.

Die Tiefe t der Ausnehmung 5 entspricht etwa der Hälfte der Höhe h des Schraubenkopfes 3, wobei die Höhe h des Schraubenkopfes 3 etwa ein Drittel des Durchmessers D ist.

Um die Ausnehmung 5 gegen Witterungseinflüsse und Schmutz zu schützen, kann in die Ausnehmung 5 eine Abdeckung formschlüssig eingesetzt sein (nicht dargestellt).

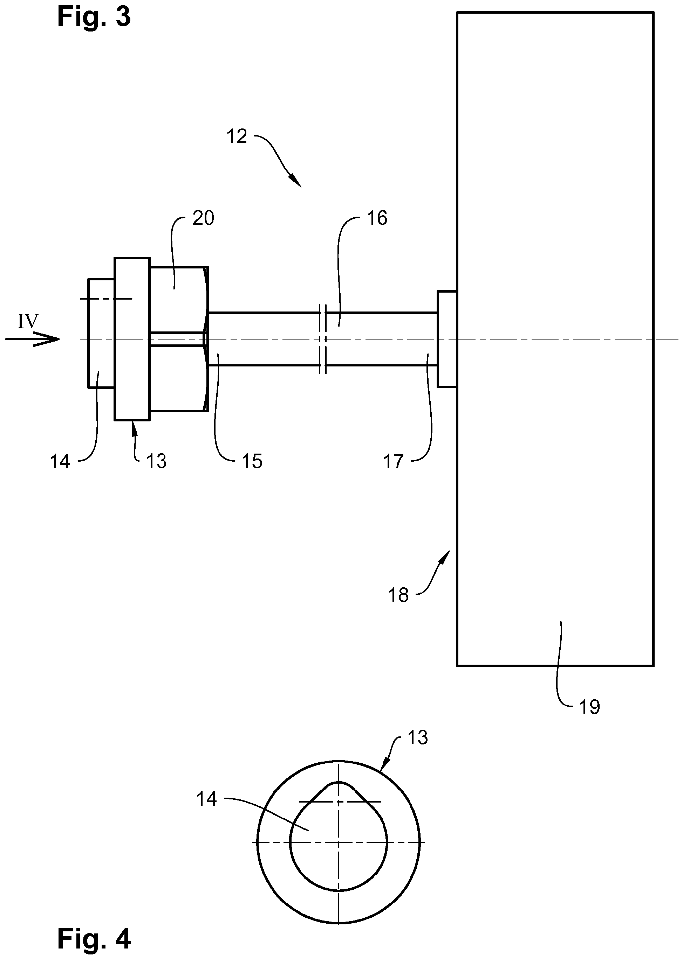

Das in der **Fig. 3** und **4** dargestellte Ausführungsbeispiel eines Schraubwerkzeugs 12 zum Ein- und Ausdrehen bzw. Anziehen und Lösen der Schraube 1 weist ein Steckelement 13 auf, das mit einem Ansatz 14 formschlüssig in die Ausnehmung 5 der Schraube 1 einsetzbar ist. Das Steckelement 13 ist an einem Ende 15 einer Betätigungsstange 16 angeordnet, an dessen anderen Ende 17 ein Griffelement 18 zum Aufbringen einer erforderlichen Kraft zum Anziehen und Lösen der Schraube 1, vorzugsweise ein T-förmig ausgebildeter Griff 19 vorgesehen ist, wobei der T-förmig ausgebildete Griff 19 eine Einhandbedienung des Schraubwerkzeugs 12 gewährleistet.

Zum Aufbringen einer eventuell notwendigen höheren Kraft auf die Schraube 1 kann das Steckelement 13 an seinem Umfang zusätzlich einen Mehrkant 20 aufweisen. Bevorzugt hierbei ist eine Ausbildung des Mehrkants 20 als Vierkant oder als Sechskant.

## Patentansprüche

1. Schraube (1) zum lösbaren Befestigen von öffentlich zugänglichen Gegenständen, wie Poller mit und ohne Beleuchtung, Straßenmobiliar, Straßenschilder, Spielplatzgeräte u. dgl., an einem im Boden verankerten Befestigungselement, wobei die Schraube (1) einen zylindrischen Schraubenkopf (3) mit einem daran ausgebildeten Gewindeschaft (2) aufweist, wobei an dem Schraubenkopf (3) eine Werkzeugaufnahme (4) vorgesehen ist,
**dadurch gekennzeichnet,**
**dass** die Werkzeugaufnahme (4) aus einer Ausnehmung (5) in dem Schraubenkopf (3) mit einer tropfenförmig ausgebildeten Eingriffskontur (6) gebildet ist.

2. Schraube nach Anspruch 1,
**dadurch gekennzeichnet,**
**dass** die tropfenförmig ausgebildete Eingriffskontur (6) einen koaxial zu einer Längsmittelachse (7) der Schraube (1) verlaufenden größeren Kreisringabschnittswandbereich (8) und einen mit radialem Abstand (a) zu der Längsmittelachse (7) angeordneten kleineren Kreisringabschnittswandbereich (9) aufweist, wobei die Kreisringabschnittswandbereiche (8, 9) über dieselben tangierte gerade Wandbereiche (10, 11) miteinander verbunden sind.

3. Schraube nach Anspruch 1 oder 2,
**dadurch gekennzeichnet,**
**dass** eine Tiefe (t) der Ausnehmung (5) etwa der Hälfte der Höhe (h) des Schraubenkopfes (3) entspricht.

4. Schraube nach einem der Ansprüche 1 bis 3,
**dadurch gekennzeichnet,**
**dass** die Höhe (h) des Schraubenkopfes (3) etwa ein Drittel des Durchmesser (D) des Schraubenkopfes (3) ist.

5. Schraube nach einem der Ansprüche 1 bis 4,
**dadurch gekennzeichnet,**
**dass** in die Ausnehmung (5) eine dieselbe gegen Witterungseinflüsse und Schmutz schützende Abdeckung formschlüssig einsetzbar ist.

6. Schraube nach einem der Ansprüche 1 bis 5,
**dadurch gekennzeichnet,**
**dass** die Schraube (1) aus Stahl besteht.

7. Schraube nach Anspruch 5,
**dadurch gekennzeichnet,**
**dass** die Schraube (1) eine Verzinkung aufweist.

8. Schraube nach einem der Ansprüche 1 bis 5,
**dadurch gekennzeichnet,**
**dass** die Schraube (1) aus Edelstahl besteht.

9. Schraubwerkzeug (12) zum Ein- und Ausdrehen einer Schraube (1) nach den vorangehenden Ansprüchen,
**dadurch gekennzeichnet,**
**dass** das Schraubwerkzeug (12) ein Steckelement (13) aufweist, das mit einem Ansatz (14) formschlüssig in die Ausnehmung (5) der Schraube (1) einsetzbar ist.

10. Schraubwerkzeug nach Anspruch 9,
**dadurch gekennzeichnet,**
**dass** das Steckelement (13) an einem Ende (15) einer Betätigungsstange (16) angeordnet ist, wobei an dem anderen Ende (17) der Betätigungsstange (16) ein Griffelement (18) vorgesehen ist.

11. Schraubwerkzeug nach Anspruch 10,
**dadurch gekennzeichnet,**
**dass** das Griffelement (18) an dem anderen Ende (15) der Betätigungsstange (16) ein T-förmig ausgebildeter Griff (19) ist.

12. Schraubwerkzeug nach einem der Ansprüche 9 bis 11,
**dadurch gekennzeichnet,**
**dass** das Steckelement (13) an seinem Umfang einen Mehrkant (20), bevorzugt einen Vierkant, besonders bevorzugt einen Sechskant aufweist.

13. Stadtmobiliar, wie Poller mit und ohne Beleuchtung, Straßenmobiliar, Straßenschilder, Spielplatzgeräte u.dgl., mit einer Schraube (1) und einem Schraubwerkzeug (12) nach den vorangehenden Ansprüchen.
